Europäisches Patentamt

European Patent Office

Office européen des brevets

(19)

(11) Publication number: **0 040 887**

**B1**

# EUROPEAN PATENT SPECIFICATION

(45) Date of publication of patent specification: 21.03.84

(51) Int. Cl.³: **C 02 F 11/00**

(21) Application number: **81200551.0**

(22) Date of filing: **21.05.81**

(54) **Method and apparatus for treatment and hygienisation of sewage sludge and other organic sludges.**

(30) Priority: **22.05.80 NL 8002971**

(43) Date of publication of application:
**02.12.81 Bulletin 81/48**

(45) Publication of the grant of the patent:
**21.03.84 Bulletin 84/12**

(84) Designated Contracting States:
**AT BE CH DE FR GB IT LI NL SE**

(56) References cited:
**CH - A - 534 639**
**DE - A - 2 243 861**
**DE - C - 265 720**
**GB - A - 1 307 494**

(73) Proprietor: Schmidt, Jan
Dr. Mees ten Oeverlaan 24
NL-3648 XB Wilnis (NL)

(72) Inventor: Schmidt, Jan
Dr. Mees ten Oeverlaan 24
NL-3648 XB Wilnis (NL)

(74) Representative: van der Beek, George Frans et al,
Nederlandsch Octrooibureau Johan de Wittlaan
15 P.O. Box 29720
NL-2502 LS Den Haag (NL)

Courier Press, Leamington Spa, England.

Method and apparatus for treatment and hygienisation of sewage sludge and other organic sludges

The invention relates to a method for the hygienisation of sewage sludge and other organic sludges by separating it into water and solid particles, which method comprises pressurisation of the sludge with a gas such as air and releasing said pressure.

Such a method is known from Swiss Patent Specification 534,639. According to said known method the sludge is pressurized within a tank and after sufficient time allowing the absorption of the gas the pressure is released. This pressure release only means that the gas is allowed to escape from the tank. Pressurisation and pressure release can be repeated and the result is a separation of the sludge into water and solid particles. A similar method has been described in German Patent Specification 2,243,861 which also mentions that upon pressure release the gas bubbles may generate a floatation effect, moving the solid particles of the sludge towards the water surface.

This known method is not very effective because pressure drop requires too much time. The result is that separation is insufficient and bacteria are not destroyed.

The problem of treatment and hygienisation of sludge, as residual product of wastewater treatment, is very old. The easiest and cheapest way to dispose of this sludge is sea dumping or storage on drying beds, by which the sludge is exposed to a prolonged natural thickening process before it can be removed.

Sea dumping results in pollution of the sea, especially when this takes place near the coast and coastal seacurrents exist, while sea dumping at greater distance will dramatically increase transportation costs. Land area for drying beds is scarce in places with a high population, whilst just these places produce the greatest sludge volumes.

The sludge may contain hazardous pathogenic bacteria.

Many mechanical and chemical methods exist to change the properties of the sludge and to make it useful for other purposes like fertilizer.

The extended aeration technology serves to obtain selfdestruction of the biomass resulting in reduction of bacteria population and sludge volume. Digestion of sludge is also practised at a temperature of approx. 35 degr. C. under anaerobic conditions. This process takes two to three weeks and organic components are partly converted into $CO_2$, $H_2O$ and $CH_4$.

It is further practised, to increase dewaterability and to effect the bacterial level, to add chemicals like lime, metal salts and/or polymeres.

Heat treatment methods are known as well like:

a) pasteurisation at a temperature between 70 and 75°C under slight overpressure.
b) treatment under higher pressure, between 25 and 30 bars at a temperature of 200°C, and treatment with partial or complete oxydation by which operating pressures between 25 and 125 bars are used at temperatures between 190 and 280°C; at the same time air is introduced to obtain oxydation.

Examples of last mentioned methods can be found in the Dutch patent 144.560 and published Dutch patent application 149.768. All known methods have quite a number of disadvantages such as high energy requirement, high investment costs, high operating costs, highly polluted supernatant liquor, odour nuisance, increase of sludge volume as a result of adding chemicals, fouling of the installation especially at higher temperatures etc.

Aim of the invention is to provide a method with which all these problems can be solved in an extreme simple way.

According to the invention this is achieved in that the absorbed gas containing sludge is passed through a discharge device of a pressurized vessel by the pressure of the pressurizing gas and the pressure release is a semi-explosive pressure drop of each sludge quantity immediately behind said device after having passed said device and upon entering a space of substantially lower pressure such as atmospheric pressure.

The quantity of gas that can be dissolved is direct proportional with the pressure applied. Preferable is compressed air, but other gases can be used as well. In this respect it is mentioned that when oxygen is used a pre-killing effect is obtained as this gas is toxic towards the biological sludge mass. In case light with short wavelength in combination is used the effect can be dramatically increased. Preferably the process is executed with an overpressure between 7 and 70 bar.

The gasabsorption means that the gas penetrates into the cells of the organic material and bacteria. When the mixture has balanced out concerning pressure and corresponding gas absorption capacity, the pressure is suddenly released, resulting in bursting of the cells because the gas that is absorbed during a certain period of time has no time to escape in an equal time period. This cell bursting means that they are destroyed; this also means destroying of the bacteria and besides this it also results in liberation of the cellwater, the capillar water and separation of the colloidal suspended solids. The method according to the invention is not only resulting in destruction of cell structures and consequently of bacteria, but at the same time in a flotating separation as a result of which the liberated solids do not sink but float. A proper separation of water and remaining solids can be achieved afterwards in a simple way by using a flotation unit.

The method can be executed in such a way that primarily a pressurized vessel is filled with sludge, batch wise, and after gas absorption a discharge valve is suddenly opened and a batch or part of it can escape. It is also possible to operate on a continuous basis by means of a controlled discharge unit, provided that the pressure and liquid level is kept constant.

The method according to the invention is surprisingly simple; what is required is just an installation to pressurize the sludge and air and an installation to add the compressed air to the sludge. The invention thus relates to an apparatus to execute the method and consists of a column with a sludge feed at the topmost part and sludge discharge at the bottom part, which column is provided with trays arranged cascade wise or equal means to divide the sludge into thin layers, which column is connected to a source of pressurized gas that can be disconnected, which connection is situated between sludge feed and discharge.

When cell material is disrupted, no chemical or physical alterations of cell components will take place. Superheating cannot take place, in contrary, the adiabatical expansion will result in cooling of the liquid. The efficiency of cell disruption depends on the pressure applied. At higher pressure larger amounts of air will be dissolved in the cells and a high degree of cell disruption can be expected. Decompression of the sludge can be executed in a simple way by means of a special homogenizing discharge unit at the bottom part of the column. When this unit is opened or when a controlled discharge will take place, the gas-saturated mixture is evacuated to atmospheric conditions. When this takes place the available pressure energy in the liquid will be converted into kinetic energy and creates an extreme violence in the sludge mass, respectively results in high liquid velocities, turbulence and shearforces, so that an homogenization effect will result.

When operating at high pressure, in this respect velocities as high as that of sound can be achieved. The large volume of air that is absorbed under force will be separated from the sludge after passing the discharge unit in a semi-explosive way. The alterations in sludge structure obtained, physically result in a uniformity in size of the sludge particles which is of extreme importance for improved flotation as a means to create maximum water separation; the types and other water binding properties of the different types of sludge like free water, adsorbed- and capillar water, intra cellular- and colloidal water are strongly effected by this homogenization procedure. With the proposed technology the compactness and the inhomogenity of the sludge is destroyed and an improved separation of solids and liquid is obtained; with the elevated pressure technology it is now made possible to flotate all types of sludge or mixtures of it in a satisfactorily way and will increase dry solids concentration considerably. As a result of this, final sludge volume will be reduced to at least 50% of the original underflow from e.g. a gravity thickener which outcome is obtained after extensive testwork.

The method is insensitive to dry solids concentrations; all organic mixtures can be treated on condition that they are free flowing liquids.

Tests have been executed with pressure between 40 and 50 bars and a calculated energy consumption of approx. 2.5 kWh per m 3 of liquid. It is possible to operate with low pressure, but with high pressure as well. Selection of operating pressure is predetermined by the sludge characteristic and retention time of the sludge in the system which offers an optimum in processing. If low pressure is preferred, improved results can be obtained e.g. by adding chemicals, such as potash to the mixture, resulting in lower osmotic pressure of the mixture in comparison with the cell liquid itself. The cells will show a preswelling effect. this phenomenon however is known in the respective art.

The efficiency of cell rupture depends on the physical properties of the different bacteria species, the age of the biomass, the pressure applied and the degree of gas saturation of the cell suspension.

The air applied for cell fractionating is liberated after pressure release and now functions as flotating medium for the treated sludge particles. Innumerable tiny air bubbles are spontaneously formed throughout the liquid and force the treated particles to the surface resulting in an intense floating effect. Tests have indicated that 50% of the original sludge volume can be separated as clean white water from the original sludge with e.g. 4—5% dry solids.

For separation purposes flotation thickeners can be used and centrifuges or beltfilter-presses in case further dewatering is required.

The apparatus for execution of the process according to the invention can be fully automated. Preferably the discharge unit is automatically controlled by a level controller that is connected to the column and adjusted to a predetermined level setting.

Purpose of the sludge retention time is to expose the mixture sufficiently long to the pressurized gas/sludge mixture, in order to enable the dissolved gas in the liquid to penetrate through the cell membranes (walls) into the cell liquid.

The connection of the pressurized gas source is located between sludge entrance and discharge, but preferably in the gas zone itself.

Forementioned methods from the Dutch patent 144.560 and the published Dutch patent application 149.768 which describe the thermal oxidation sludge treatment also operate with high pressure. These pressures however in the first place serve to secure that the liquid phase of the sludge will not be converted into a gas phase at the respective temperature. The introduction of pressurized air serves to partly oxydize the sludge mixture. This oxydation serves to destroy cells and is obtained by heating in presence of oxygen. Disruption of cells by rapid decompression does not take place. The cells are already destroyed as a result of temperature elevation and oxydation before pressure is released. After being discharged, consequently no flotation but settlement of the solids will take place.

With the method according to the invention also gases that do not contain oxygen can be used like nitrogen; this is not possible with the wet oxydation process. The invention now will be further explained and reference is made to the pertaining sketch on which the principle of the invention schematically is shown.

This drawing indicates a column 1, provided with a number of trays 2, that ensure a cascade wise down flow of the sludge that enters the column at 3 thus creating a maximum of free surface area and holding time of the liquid to obtain optimal exposure to the pressurized gas that enters the column at 4. The sludge feed takes place with pump 5 and pipe 6 to the entrance 3 of column 1. In pipe 6 a flow indicator 7 is installed by which the sludge flow is measured and indicated. An alarm signal will indicate when pump 5 is malfunctioning. At 8 a multi-stage air compressor is installed supplying compressed air to the column through air-vessel 9, a pipe 10 and connection 4. Pipe 10 is provided with a valve 11 that is automatically controlled by pressure indicator 12, controlling the pressure level at a predetermined setting. The column 1 is provided with a discharge pipe 13 and valve 14 which valve has a discharge pipe 15, preferably connected to a flotation tank which is not indicated. This valve 14 can be controlled automatically by level controller 16 measuring the liquid level in column 1 continuously. The level controller 16 controls valve 14 in such a way that the sludge mixture 17 is evacuated by using the gaspressure in column 1; the sludge is kept at a constant level. Pump 5 will feed the sludge from a sludge holding tank or sludge thickener, in which some thickening has already taken place into column 1; the flow can easily be adjusted by a variable drive. Sludge pump 5 must be able to feed the sludge into the pressurized saturation column 1 and therefore must have a max. discharge pressure of e.g. 50 bar. A piston or piston membrane pump can be used for this purpose. The sludge enters at 3 and hits the splashplate 18 to increase liquid/gas contact area; more gas absorption takes place by passing cascade trays 2 during downward flow. During this downward flow sufficient time is available to saturate the sludge with gas. In the undermost part of column 1 the cell suspension is enabled to absorb gas through cell walls and when this has taken place after e.g. 5 minutes, discharge can take place. This discharge preferably is located slightly above the bottom 19 to collect coarse particles. This part should be provided with a cleaning-out cover to remove these particles.

Discharge valve 14 can be automatically controlled by a level controller 16 measuring the static height of the liquid column; this column height has a relationship to the sludge retention time required for proper absorption of gas into the cell suspension.

Pressurized air can be admitted at any place between sludge feed and sludge discharge. A connection in the gas zone is preferred to prevent sludge entering the gas piping system when the gas system is off pressure or during idle time of the plant.

The air compressor 8 can be a normal multi stage unit suitable for e.g. 60 bar max. discharge pressure. A volume of 1 Nm3 atmospheric air per m3 of sludge is a reasonable sizing parameter.

The efficiency of the compressed gas that is supplied to column 1 is 100% since gas is only discharged by the saturated sludge mixture itself.

Method and apparatus according to the invention can be easily stopped and started; these operations can be executed in a very short time. The plant can stand idle under full operating pressure without any loss of energy. Absence of heat will give no physical alterations, nor fouling or scaling of the system will take place.

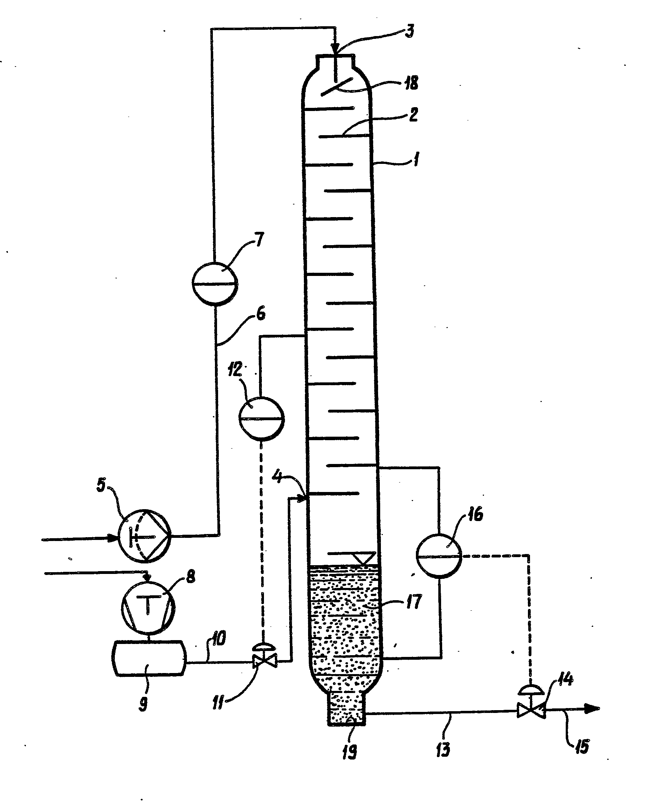

## Claims

1. Method for the hygienisation of sewage sludge and other organic sludges by separating it into water and solid particles, which method comprises pressurisation of the sludge with a gas such as air and releasing said pressure, characterized in that the absorbed gas containing sludge is passed through a discharge device of a pressurized vessel by the pressure of the pressurizing gas and the pressure release is a semi-explosive pressure drop of each sludge quantity immediately behind said device after having passed said device and upon entering a space of substantially lower pressure such as atmospheric pressure.

2. Method according to claim 1 characterized in that the sludge is pressurized to a pressure level ranging between 7 and 70 bar, preferably 50 bar.

3. Apparatus to execute the method according to claims 1 or 2, characterized in that the apparatus consists of a column with sludge feed on the topmost part and an homogenizing sludge discharge at the bottom which column is provided with cascade trays or identical means to divide the sludge into thin layers, which column is connected to a source of pressurized gas that can be shut off, which connection is situated between sludge feed and sludge discharge.

4. Apparatus according to claim 3, characterized in that the discharge device is provided with an homogenizing sludge control valve connected to a level controller at the column, controlling that valve according to a preset level of the liquid in the column.

## Revendications

1. Procédé pour rendre hygiéniques des boues d'égout et autres boues organiques en les séparant en eau et particules solides, ce procédé comportant la pressurisation de la boue par un gaz tel qu'air et le relachement de ladite pression, caractérisé en ce qu'on envoie la boue contenant du gaz absorbé traverser un dispositif de décharge d'un récipient sous pression sous l'effet de la pression du gaz de pressurisation, et le relachement de la pression est une baisse de pression semi-explosive subie par chaque quantité de boue immédiatement en aval audit dispositif après la traversée de celuici et à l'entrée dans un espace sous une pression sensiblement plus faible telle que la pression atmosphérique.

2. Procédé selon la revendication 1, caractérisé en ce que la boue est préssurisée à une pression dans la gamme allant de 7 à 70 bars, de préférence 50 bars.

3. Appareil pour la mise en ouevre du procédé selon les revendications 1 ou 2, caractérisé en ce qu'il consiste en une colonne avec alimentation en boue à sa partie supérieure et une décharge homogénéisante de boue à sa partie inférieure, cette colonne étant pourvue de plateaux à cascade ou moyens analogues pour diviser la boue en couches fines, ladite colonne étant connectée à une source de gaz sous pression qui peut être mise hors circuit, la connexion étant située entre l'alimentation et la décharge de la boue.

4. Appareil selon la revendication 3, caractérisé en ce que le dispositif de décharge est pourvu d'une vanne de commande d'homogénéisation de boue connectée au dispositif de commande du niveau dans la colonne, ce dispositif commandant cette vanne en relation avec un niveau fixé à l'avance du liquide dans la colonne.

## Patentansprüche

1. Verfahren für die Behandlung und Hygenisierung von Abwasserschlamm und anderen organischen Schlämmen durch Trennung in Wasser und Feststoffteile, bei dem der Schlamm mit einem Gas, wie Luft, unter Druck gesetzt und der Druck wieder abgebaut wird, dadurch gekennzeichnet, daß der as absorbierte Gas enthaltende Schlamm mittels des Druckes des unter Druck stehenden Gases durch eine Entladeeinrichtung eines Druckkessels geleitet wird und daß der Druckabbau als halbeexplosiver Druckabfall jeder Schlamm-Menge unmittelbar hinter dieser Entladeeinrichtung durchgeführt wird, nachdem diese Schlamm-Menge diese Entladevorrichtung passiert hat und in einen Raum mit einem kleineren Druck als der atmosphärische Druck gelangt ist.

2. Verfahren nach Anspruch 1, dadurch gekennzeichnet, daß der Schlamm auf einen Druck zwischen 7 bis 70 bar, vorzugsweise 50 bar gebracht wird.

3. Vorrichtung zur Durchführung des Verfahrens nach Anspruch 1 oder 2, dadurch gekennzeichnet, daß die Vorrichtung eine Schlammeingabe am obersten Teil einer Säule und eine homogenisierende Schlammentladung am Boden der Säule aufweist, daß die Säule mit Kaskaden-Einsätzen oder ähnlichen Mitteln versehen ist, die den Schlamm in dünne Schichten aufteilen, daß die Säule mit einer Druckgasquelle verbunden ist, die stillgesetzt werden kann, und daß diese Verbindung zwischen der Schlammeingabe und der Schlammentladung angeordnet ist.

4. Vorrichtung nach Anspruch 3, dadurch gekennzeichnet, daß die Entladeeinrichtung mit einem homogenisierenden Schlamm-Steuerventil versehen ist, das mit einer Pegelkontrolleinrichtung an der Säule verbunden ist, die das Steuerventil entsprechend dem vorliegenden Flüssigkeitspegel in der Säule steuert.